# EUROPÄISCHE PATENTSCHRIFT

(11) **EP 2 102 509 B1**
(45) Veröffentlichungstag und Bekanntmachung des Hinweises auf die Patenterteilung: **15.09.2010**
(21) Anmeldenummer: 07723588.5
(22) Anmeldetag: 26.03.2007
(51) Int. Cl.: F15B 13/08, F16B 5/02, F16B 41/00

(54) **ZUGANKER UND DAMIT ZUSAMMENGESPANNTE MODULANORDNUNG**
TIE-ROD AND MODULE ARRANGEMENT CLAMPED TOGETHER THERETO
TIRANT ET ENSEMBLE DE MODULES ASSEMBLÉS PAR SERRAGE À L'AIDE DUDIT TIRANT

(43) Veröffentlichungstag der Anmeldung: 23.09.2009
(73) Patentinhaber: FESTO AG & Co. KG, 73734 Esslingen (DE)
(72) Erfinder: WENSKE, Eduard, 71679 Asperg (DE)
(74) Vertreter: Abel, Martin
(86) Internationale Anmeldenummer: PCT/EP2007/002641
(87) Internationale Veröffentlichungsnummer: WO 2008/116481

(56) Entgegenhaltungen:
- DE-T2- 60 204 741
- GB-A- 2 180 616
- US-A1- 2003 116 208

## Beschreibung

Die Erfindung betrifft einen Zuganker zum lösbaren Zusammenspannen mehrerer Module, insbesondere eines modularen Fluidgerätes, wobei sich der Zuganker aus wenigstens drei axial aufeinanderfolgenden Zugankerelementen zusammensetzt, die zur Bildung je einer lösbaren Schraubverbindung paarweise ineinander einschraubbar sind. Die Erfindung betrifft ferner eine Modulanordnung, die mehrere mittels mindestens eines derartigen Zugankers zusammengespannte Module enthält.

Einen derartigen Stand der Technik offenbart die DE 60204741 T2. Dort werden die einzelnen Module eines modular aufgebauten Fluidgerätes mittels eines Zugankers zusammengespannt, der sich aus mehreren miteinander verschraubten Zugankerelementen zusammensetzt. Beim Zusammenbau des Ventilgerätes werden die einzelnen Module nacheinander aneinander angesetzt und mittels je eines Zugankerelementes mit dem jeweils vorhergehenden Modul verspannt. Das Zerlegen des Ventilgerätes geschieht in umgekehrter Reihenfolge, indem die Zugankerelemente nacheinander wieder herausgeschraubt werden. Hierbei bewirkt das momentan zu entfernende Modul eine Verdrehsicherung des nachfolgenden Zugankerelementes, indem dieses mit seinem Kopf in eine komplementäre Ausnehmung des genannten Moduls eingreift. Von Nachteil bei dieser Anordnung ist, dass zum Austausch eines Moduls stets zwingend auch sämtliche dem auszutauschenden Modul vorgelagerten Module einzeln entfernt werden müssen.

Man könnte zwar daran denken, auf die Verdrehsicherungsmaßnahmen der einzelnen Zugankerelemente zu verzichten. In diesem Fall würde allerdings die sich bei Betätigung des äußersten Zugankerelementes öffnende Schraubverbindung nur nach dem Zufallsprinzip ausgewählt werden, abhängig von der individuellen Vorspannung und Reibung bei den einzelnen Schraubverbindungen. Somit wäre auch hier der spezifische Austausch bestimmter Module relativ umständlich.

Eine wesentliche Aufgabe der vorliegenden Erfindung besteht darin, Maßnahmen vorzuschlagen, die einen gezielten Modulaustausch bei einer durch mindestens einen Zuganker zusammengespannten Modulanordnung vereinfachen.

Zur Lösung dieser Aufgabe ist bei einem Zuganker der eingangs genannten Art vorgesehen, dass an den Zugankerelementen für jede der Schraubverbindungen Sperrmittel vorhanden sind, die es gestatten, die ineinandergeschraubten Zugankerelemente jedes Zugankerelementpaares zunächst ohne Sperrwirkung ein Stück weit auseinanderzuschrauben, und die vor dem vollständigen Auseinanderschrauben eines jeweiligen Zugankerelementpaares eine Sperrwirkung entfalten, indem sie eine in der Drehrichtung des Lösens der Schraubverbindung drehfeste, jedoch individuell entsperrbare Blockierung zwischen den Zugankerelementen hervorrufen.

Die Aufgabe wird ferner gelöst durch eine sich aus mehreren Modulen zusammensetzende Modulanordnung, bei der die Module mittels mindestens eines Zugankers des vorgenannten Aufbaus lösbar zusammengespannt sind.

Wird hier der Zuganker durch Drehbetätigung eines äußeren Zugankerelementes auseinandergeschraubt, lösen sich die vorhandenen Schraubverbindungen zunächst nach dem Zufallsprinzip, in Abhängigkeit von der individuellen Vorspannung und/oder Reibung. Die Sperrmittel sind hierbei noch unwirksam und erlauben daher jeweils ein Stück weit ein axiales Auseinanderschrauben der unmittelbar miteinander verschraubten Zugankerelemente. Tritt bei diesem Schraubvorgang bei einer beliebigen Schraubverbindung die Sperrwirkung der dortigen Sperrmittel ein, werden die hier miteinander verschraubten Zugankerelemente gegenseitig drehfest blockiert und das von außen eingeleitete Drehmoment wird über die drehfeste Verbindung an die anderen, noch nicht gesperrten Schraubverbindungen weitergeleitet. Auf diese Weise tritt nacheinander bei allen Schraubverbindungen die Sperrwirkung ein, bis letztlich ein Weiterdrehen in der Drehrichtung des Lösens insgesamt nicht mehr möglich ist. Indem nun jedoch eine der Schraubverbindungen individuell entsperrt wird, kann dort durch anschließendes weiteres Herausschrauben ein Auftrennen des Zugankers bewirkt werden. Auf diese Weise lässt sich der axial segmentierte Zuganker, beispielsweise zum Austauschen von Modulen einer durch ihn zusammengehaltenen Modulanordnung, zielgerichtet auftrennen, was die Handhabung sehr vereinfacht.

Vorteilhafte Weiterbildungen der Erfindung gehen aus den Unteransprüchen hervor.

Wenigstens die zwischen den beiden äußeren Zugankerelementen angeordneten Zugankerelemente sind, eventuell abgesehen von einer unterschiedlichen Länge, bevorzugt identisch ausgebildet. Sie sind insbesondere einenends mit einem Gewindeschaft und andernends mit einer Gewindebohrung ausgestattet, wobei die Gewinde hinsichtlich ihrer Spezifikationen übereinstimmen. Die beiden äußeren Zugankerelemente können abweichend gestaltet sein, weil sie nur in einer axialen Richtung eine Gewindeverbindung herzustellen haben. Das eine Gewindebohrung zur Verfügung stellende äußere Zugankerelement kann theoretisch sogar unmittelbar vom letzten der zusammenzuspannenden Module selbst gebildet sein, indem dieses direkt mit einer Gewindebohrung ausgestattet wird.

Es ist von Vorteil, wenn die Sperrmittel jeweils federnd in Richtung ihrer Sperrstellung vorgespannt sind. Dadurch erübrigen sich äußere Eingriffe, insbesondere auch beim Zusammenschrauben des Zugankers. Die Sperrmittel sind insbesondere so ausgeführt, dass sie beim Ineinanderschrauben der Zugankerelemente ohne spezielle direkt Einflussnahme unwirksam sind und beim Auseinanderschrauben der Zugankerelemente bei Erreichen einer gewissen Relativposition derselben selbsttätig in blockierender Weise wirksam werden.

Prinzipiell sind Bauformen denkbar, bei denen ein manueller Eingriff erforderlich ist, um die Sperrmittel nach dem Ineinanderschrauben der Zugankerelemente in einen betriebsbereiten Zustand zu versetzen.

Zweckmäßigerweise sind die Sperrmittel jeweils mit einem Betätigungsabschnitt versehen, der manuell oder auch mittels eines Werkzeuges beaufschlagt werden kann, um das individuelle Entsperren zu bewirken.

Bei einer besonders vorteilhaften Ausgestaltung enthalten die Sperrmittel jeweils mindestens eine am jeweils einen Zugankerelement angeordnete, radial auslenkbare Sperrklinke, die während der Sperrwirkung mit einer als Sperrstufe bezeichenbaren Abstufung des zugeordneten anderen Zugankerelementes nach Art eines Riegels kooperiert. Die Sperrklinke ist bevorzugt um eine zur Längsachse des Zugankerelementes parallele Schwenkachse verschwenkbar und gleitet während des Schraubvorganges an einer bevorzugt zylindrischen Außenfläche des anderen Zugankerelementes ab, bis es mit der Sperrstufe in Eingriff gelangt. Letztere ist hierbei insbesondere vom Endabschnitt einer sich in der Umfangsrichtung des Zugankerelementes erstreckenden, einen bogenförmigen Verlauf aufweisenden keilförmigen Vertiefung gebildet.

Damit der Zuganker in seinen radialen Abmessungen klein gehalten werden kann, empfiehlt sich auch eine bogenförmige Gestaltung der Sperrklinke, sodass sich selbige platzsparend entlang des Außenumfanges des anderen Zugankerelementes erstrecken kann.

Die Sperrklinke kann insbesondere wippenartig ausgebildet sein, wobei sie ergänzend zu dem mit der Sperrstufe zusammenwirkenden Sperrabschnitt einen in eine andere Richtung ragenden Betätigungsabschnitt aufweist, auf den zum Entsperren und zum Freigeben der zugeordneten Schraubverbindung eingewirkt werden kann, damit der Sperrabschnitt außer Eingriff mit der Sperrstufe gelangt.

Bevorzugt sitzt die Sperrklinke an einem zur Längsachse des Zugankerelementes koaxialen hülsenförmigen Sperrklinkenträger. Bei ihm kann es sich um eine separate, bevorzugt aus Kunststoffmaterial bestehende Komponente handeln, die an ein insbesondere aus Metall bestehendes, die erforderlichen Gewinde aufweisendes Gewindeelement des Zugankerelementes angebracht ist. Die Befestigung erfolgt insbesondere im Rahmen einer Rastverbindung.

Die erfindungsgemäße Modulanordnung kann mit einem oder mehreren der erfindungsgemäßen Zuganker ausgestattet sein. Es handelt sich bei der Modulanordnung insbesondere um ein modular aufgebautes Fluidgerät, beispielsweise ein Ventilgerät oder auch ein zur Druckluftaufbereitung nutzbares Wartungsgerät. Bei dem Fluid handelt es sich bevorzugt um Druckluft.

Innerhalb der Modulanordnung erstreckt sich der Zuganker zweckmäßigerweise in einem Zugankerkanal, der sich durch sämtliche Module hindurch erstreckt. Zumindest die zwischen den beiden äußeren Zugankerelementen angeordneten Zugankerelemente sind zweckmäßigerweise jeweils verliersicher und zugleich drehbar in einem der Module fixiert. Sie können insbesondere diesseits und jenseits über das betreffende Modul vorstehen.

Zweckmäßigerweise ist der Zuganker so auf die Modulanordnung abgestimmt, dass seine Sperrmittel jeweils im Übergangsbereich zwischen zwei unmittelbar benachbarten Modulen zu liegen kommen. Dies erleichtert den Entsperrvorgang, wenn man die Modulanordnung nach dem bis zur Sperrwirkung erfolgten Lösen der Schraubverbindungen auseinanderschiebt.

Das Entsperren der Schraubverbindungen ermöglichende Entsperrmittel könnten auch als unmittelbarer Bestandteil der einzelnen Module ausgeführt sein. Vorstellbar wäre beispielsweise ein das Hindurchführen eines Entsperrwerkzeuges gestattender Kanal oder ein von außen her betätigbarer Taster oder Schalter.

Nachfolgend wird die Erfindung anhand der beiliegenden Zeichnung näher erläutert. In dieser zeigen:
- Figur 1: eine als Ventilgerät ausgebildete Modulanordnung erfindungsgemäßer Art, die mit zwei Stück des er- findungsgemäßen Zugankers ausgestattet ist, das Ganze in perspektivischer Darstellung und unter er- gänzender Abbildung eines Entriegelungswerkzeuges,

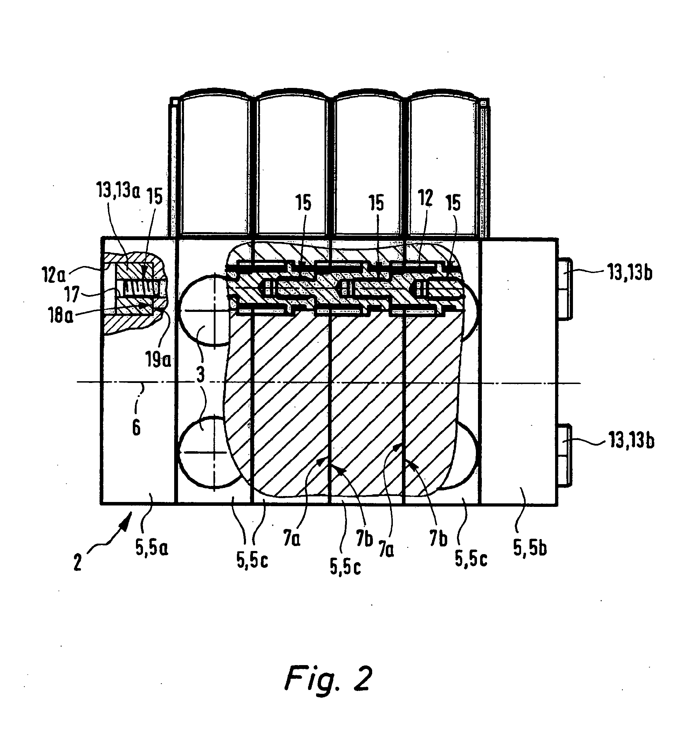

- Figur 2: die Anordnung aus Figur 1 in einer Stirnansicht mit Blickrichtung gemäß Pfeil II,
- Figur 3: einen vergrößerten Ausschnitt der Modulanordnung im Bereich eines Zugankers,
- Figur 4: ein zum Aufbau des Zugankers verwendetes Zugankere- lement bevorzugten Aufbaus in einer perspektivi- schen Darstellung,
- Figur 5: das Zugankerelement aus Figur 4 mit umgekehrter Blickrichtung,
- Figuren 6 und 7: Explosionsdarstellungen des aus Figuren 4 und 5 er- sichtlichen Zugankerelementes aus wiederum unter- schiedlichen Blickrichtungen und
- Fig. 8 bis 10: verschiedene Betriebszustände der Sperrmittel in einem Querschnitt gemäß Schnittlinie VIII-VIII aus Figur 3.

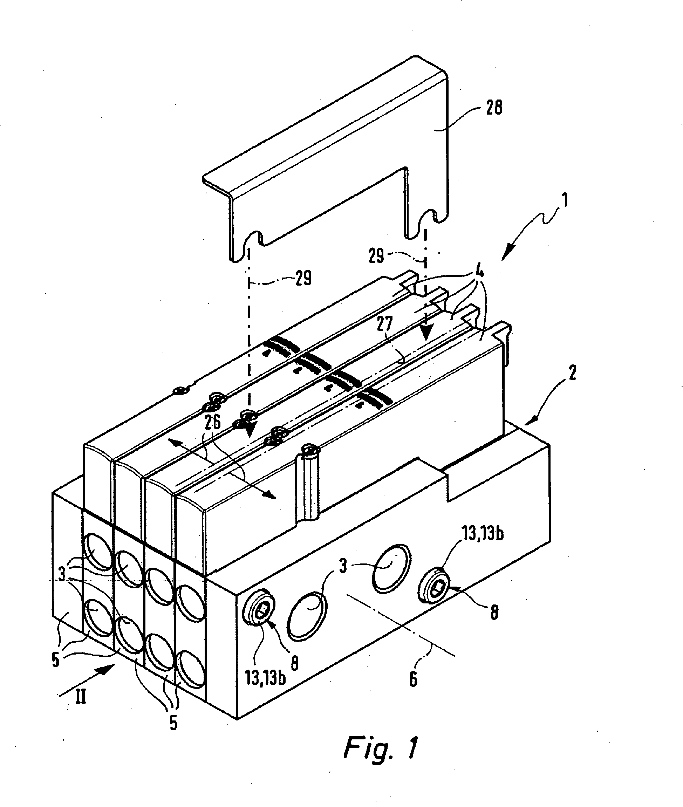

Die in Figur 1 in ihrer Gesamtheit abgebildete Modulanordnung 1 umfasst ein modular aufgebautes Fluidgerät 2, das von einem oder mehreren Fluidkanälen 3 durchzogen ist. Im Betrieb des Fluidgerätes 2 sind die Fluidkanäle 3 von einem insbesondere unter atmosphärischem Überdruck stehenden Fluid durchströmbar, insbesondere von Druckluft.

Das Fluidgerät 2 des Ausführungsbeispiels ist ein Ventilgerät, das mehrere Ventile 4 umfasst, die in der Lage sind, die Fluidströmung durch die Fluidkanäle 3 zu steuern. Allerdings lässt sich die Erfindung auch auf andere Fluidgeräte anwenden, die keine Ventile umfassen. Auch eine Anwendung bei nichtfluidischen Geräten ist mit den erfindungsgemäßen Maßnahmen möglich.

Das Fluidgerät 2 oder ein anderes Gerät enthält eine Mehrzahl von Modulen 5, die in Richtung einer Hauptachse 6 mittels einander zugewandter Fügeflächen 7a, 7b aneinandergesetzt sind. Beispielsweise sind die Module 5 block- oder plattenförmig ausgeführt. Einige der Module 5 sind exemplarisch mit je mindestens einem Ventil 4 ausgestattet.

Die Modulanordnung 1 enthält zwei Zuganker 8, die sich parallel zu der Hauptachse 6 erstrecken und mit denen die Module 5 in Richtung der Hauptachse 6 lösbar fest zusammengespannt sind. Abweichend vom Ausführungsbeispiel könnten auch weniger oder mehr als zwei Zuganker 8 Verwendung finden.

Da die Zuganker 8 untereinander identisch ausgebildet sind, konzentriert sich die nachfolgende Beschreibung auf einen dieser Zuganker 8, wobei die diesbezüglichen Ausführungen in gleicher Weise auch für den oder die anderen Zuganker 8 gelten.

Der Zuganker 8 hat eine im Allgemeinen stabförmige Gestalt und erstreckt sich in einem sämtliche Module 5 durchziehenden Zugankerkanal 12 ausreichenden Querschnittes. Der Zugankerkanal 12 ist gebildet aus mehreren, jedes einzelne Modul 5 in Richtung der Hauptachse 6 durchsetzenden Durchgangskanälen 12a, die in den Übergangsbereichen zwischen den Modulen 5 derart miteinander fluchten, dass sich der durchgängige Zugankerkanal 12 ergibt.

Um seine Spannfunktion erfüllen zu können, stützt sich der Zuganker 8 endseitig an den beiden äußeren Modulen 5a, 5b ab. Dies geschieht über zwei äußere Zugankerelemente 13a, 13b des sich insgesamt aus einer Mehrzahl von Zugankerelementen 13 zusammensetzenden Zugankers 8. Die verschiedenen Zugankerelemente 13 sind in Richtung der mit der Hauptachse 6 gleichgerichteten Längsachse des Zugankers 8 axial aufeinanderfolgend angeordnet und unter Bildung von Schraubverbindungen 15 jeweils paarweise lösbar miteinander verschraubt. Das paarweise Verschrauben bezieht sich auf die beiden jeweils axial aufeinanderfolgenden Zugankerelemente 13. Dies bedeutet, dass die äußeren Zugankerelemente 13, 13a, 13b mit nur einem weiteren Zugankerelement 13 verschraubt sind, während die dazwischenliegenden inneren Zugankerelemente 13, 13c jeweils zwei Schraubverbindungen 15 eingehen, und zwar mit beiden sie jeweils axial flankierenden Zugankerelementen 13.

Infolgedessen sind sämtliche jeweils zwei Schraubverbindungen 15 eingehenden, zwischen den äußeren Zugankerelementen 13a, 13b angeordneten inneren Zugankerelemente 13, 13c untereinander bevorzugt identisch ausgebildet. Die äußeren Zugankerelemente 13a, 13b haben eine davon abweichende Gestaltung.

Zur Herstellung der Schraubverbindungen 15 sind axial benachbarte Zugankerelemente 13 lösbar ineinander eingeschraubt. Hierbei greift jeweils ein mit einem Außengewinde 16a versehener Gewindeschaft 16 des jeweils einen Zugankerelementes 13 in eine mit einem Innengewinde 17a gleicher Gewindespezifikation aufweisende Gewindebohrung 17 des darauffolgenden Zugankerelementes 13 ein.

Von den beiden äußeren Zugankerelementen 13a, 13b verfügt das eine, erste äußere Zugankerelement 13a lediglich über eine Gewindebohrung 17 und über keinen Gewindeschaft, während das andere, zweite äußere Zugankerelement 13b über lediglich einen Gewindeschaft 16 verfügt und keine Gewindebohrung aufweist. Beispielhaft ist das erste äußere Zugankerelement 13a nach Art einer Mutter und das zweite äußere Zugankerelement 13b nach Art einer Schraube ausgeführt.

Das die Funktion einer Mutter erfüllende erste äußere Zugankerelement 13a ist drehfest in dem zugeordneten äußeren Modul 5a fixiert, beispielsweise indem es über eine unkreisförmige Außenkontur verfügt und in einem Längenabschnitt komplementären Querschnittes des zugeordneten Durchgangskanals 12a drehfest verankert ist. Beispielsweise wäre es aber auch denkbar, die zugehörige Gewindebohrung 17 unmittelbar in dem äußeren Modul 5a auszubilden, sodass dieses die Funktion des ersten äußeren Zugankerelementes 13 miterfüllt.

Das erste äußere Zugankerelement 13a stützt sich mit einer ersten Gegenabstützfläche 19a an einer axial von den anderen Modulen 5 wegweisenden ersten Abstützfläche 18a des zugehörigen äußeren Moduls 5a ab. Das nach Art einer Schraube ausgebildete zweite äußere Zugankerelement 13b verfügt über einen Kopf 22, der sich mit einer zweiten Gegenabstützfläche 19b an einer der ersten Abstützfläche 18a entgegengesetzt orientierten zweiten Abstützfläche 18b des ihm zugeordneten äußeren Moduls 5b abstützt. Auf diese Weise kann der Zuganker 8 die gewünschte Zugkraft in die äußeren Module 5a, 5b einleiten, um die anderen Module 5 dazwischen fest zu verspannen.

Die diversen Zugankerelemente 13 sind längenmäßig derart auf die in Richtung der Hauptachse 6 gemessene Breite der Module 5 abgestimmt, dass je ein Zugankerelement 13 derart eines der zwischen den beiden äußeren Module 5a, 5b angeordneten inneren Module 5c durchsetzt, dass es über dessen zwei einander entgegengesetzt orientierte Fügeflächen 7a, 7b jeweils vorsteht. Der vorstehende Längenabschnitt taucht in das sich anschließende Modul 5 ein.

Um die Module 5 miteinander zu verspannen, können zunächst das äußere Modul 5a und das darauf folgende innere Modul 5c aneinandergesetzt werden, wonach ein das innere Modul 5c durchsetzendes inneres Zugankerelement 13c mit dem ersten äußeren Zugankerelement 13a verschraubt wird. In gleicher Weise werden dann unter Herstellung der Schraubverbindungen 15 nach und nach die weiteren Module 5 angeschraubt, bis der Zuganker 8 durch Einschrauben des zweiten äußeren Zugankerelementes 13b komplettiert ist. Ein festes Zusammenspannen der einzelnen Zugankerelemente 13 ist hierbei noch nicht erforderlich. Erst wenn alle Zugankerelemente 13 eingesetzt sind, wird die Gesamtanordnung durch Betätigung des zweiten äußeren Zugankerelementes 13b, das hier als Betätigungs-Zugankerelement fungiert, zusammengespannt. Das erforderliche Drehmoment lässt sich an einem Betätigungsabschnitt 24 des zweiten äußeren Zugankerelementes 13b einleiten, der beispielhaft als Innenmehrkant ausgeführt ist.

Bei dem dem Festziehen dienenden Schraubvorgang können sich die einzelnen Zugankerelemente 13 im Bereich ihrer Schraubverbindungen 15 individuell noch mehr oder weniger weit miteinander verschrauben, wobei von außen her kein Einfluss darauf genommen werden kann, bei welcher Schraubverbindung 15 nun tatsächlich noch eine relative Einschraub-Drehbewegung stattfindet.

Bevorzugt ist die Anordnung so getroffen, dass der Zuganker 8 die ausgeübte Spannkraft nur über die beiden Abstützflächen 18a, 18b in die äußeren Module 5a, 5b einleitet. Zwischen den anderen Zugankerelementen 13 und den von diesen durchsetzten inneren Modulen 5c braucht keine Spannkraft übertragen zu werden.

Letzteres ermöglicht bei Bedarf auch eine Ausgestaltung, bei der die Zugankerelemente 13 mit Ausnahme des ersten äußeren Zugankerelementes 13a vor dem Einsetzen in die Module 5 zu einem losen Verbund zusammengeschraubt werden und dieser Gesamtverbund dann insgesamt in den Zugankerkanal 12 einsteckbar ist, nachdem die Module 5 aneinandergesetzt wurden.

Ersichtlich können nach dem geschilderten Prinzip auch Module unterschiedlicher Breitenabmessungen miteinander verspannt werden. Man muss dann lediglich auf Zugankerelemente 13 entsprechend unterschiedlicher Baulängen zurückgreifen. Abgesehen von unterschiedlichen Baulängen können aber insbesondere die inneren Zugankerelemente 13c völlig identisch ausgebildet sein.

Jeder Schraubverbindung 15 sind Sperrmittel 23 zugeordnet, die das zielgerichtete Zerlegen der Modulanordnung 1 begünstigen. Mit Hilfe der Sperrmittel 23 lässt sich der zusammengeschraubte Zuganker 8 definiert zielgerichtet an jeder der zuvor hergestellten Schraubverbindungen 15 auftrennen. Dies erlaubt ein zielgerichtetes Zerlegen der Modulanordnung 1 in jedem Fügebereich zweier Module 5, ohne dass zwischen den anderen Modulen 5 eine Auftrennung erforderlich wäre. Die Sperrmittel 23 sind Bestandteil des Zugankers 8, sodass ihre Nutzung keine spezielle Ausgestaltung des Zugankerkanals 12 erzwingt.

Die Sperrmittel 23 enthalten für jede Schraubverbindung 15 an dem einen der zu verschraubenden Zugankerelemente 13 angeordnete erste Sperrmittelabschnitte 23a und mit diesen kooperierende, am anderen der zu verschraubenden Zugankerelemente 13 angeordnete zweite Sperrmittelabschnitte 23b. Solange die Zugankerelemente 13 so weit ineinander eingeschraubt sind, dass sie die Module 5 miteinander verspannen, sind die Sperrmittel 23 unwirksam. Ausgehend von diesem fest verspannten Zustand gestatten die Sperrmittel 23 zudem, dass die miteinander verschraubten Zugankerelemente 13 ein Stück weit auseinandergeschraubt werden, ohne dass eine Sperrwirkung eintritt. Sind zwei Zugankerelemente 13 jedoch um ein vorbestimmtes Maß auseinandergeschraubt, treten die zugeordneten Sperrmittel 23 während des Herausschraubvorganges automatisch in Sperrwirkung und verhindern durch in Drehrichtung wirksamen Formschluss ein weitergehendes Auseinanderschrauben dieser Zugankerelemente 13. Es liegt dann eine in der Drehrichtung des Lösens der jeweiligen Schraubverbindung 15 drehfeste Verbindung zwischen den ineinander eingeschraubten Zugankerelementen 13 vor.

Zum Zerlegen der Modulanordnung 1 wird über das Betätigungs-Zugankerelement 13b in der Löse-Drehrichtung 25 ein Drehmoment eingeleitet, das nach und nach die vorhandenen Schraubverbindungen 15 löst. Die Reihenfolge des Lösens kann hierbei nicht beeinflusst werden, sie richtet sich insbesondere nach der Gewindereibung und individuellen Vorspannung. Es finden also relative Schraub-Lösebewegungen zwischen jeweils benachbarten Zugankerelementen 13 statt. Diese Relativbewegungen führen dazu, dass die aufeinanderfolgenden Zugankerelemente 13, die zunächst noch nicht gegenseitig blockiert sind, auseinandergeschraubt werden und ihren Abstand zueinander vergrößern. Mit individuellem Wirksamwerden der Sperrmittel 23 endet jedoch die Relativbewegung zwischen den miteinander verschraubten Zugankerelementpaaren, bis letztlich die allen Schraubverbindungen 15 zugeordneten Sperrmittel 23 ihre Sperrwirkung entfaltet haben. Das Betätigungs-Zugankerelement 13b kann nun nicht weiter gelöst werden, wobei der Zuganker 8 nun insgesamt so verlängert wurde, dass die zuvor noch eingespannten Module 5 mit axialem Bewegungsspiel zwischen den den Abstützflächen 18a, 18b axial gegenüberliegenden Gegenabstützflächen 19a, 19b der äußeren Zugankerelemente 13a, 13b angeordnet sind. Die Module 5 können daher auf den dementsprechend gelösten Zugankern 8 in Richtung der Hauptachse 6 geringfügig verschoben werden.

Dies nutzt man dazu, um die Module 5 derart gemäß Pfeilen 26 in entgegengesetzte Richtungen auseinanderzuschieben, dass zwischen denjenigen Modulen 5, zwischen denen die Modulanordnung 1 aufgetrennt werden soll, ein im Folgenden als Betätigungsspalt 27 bezeichneter Zwischenraum entsteht. Dies ist in Figur 1 strichpunktiert angedeutet.

Durch diesen Betätigungsspalt 27 hindurch kann jetzt ein in Figur 1 beispielhaft angedeutetes Entsperrwerkzeug 28 gemäß Pfeilen 29 in den Betätigungsspalt 27 eingeführt werden, um auf die im Bereich dieses Betätigungsspaltes 27 liegenden Sperrmittel 23 zum Zwecke ihres Entsperrens einzuwirken. Sämtliche Sperrmittel 23 sind unabhängig voneinander entsperrbar, können also individuell in ihrer Sperrwirkung aufgehoben werden, um die im Rahmen der zugeordneten Schraubverbindung 15 miteinander verschraubten Zugankerelemente 13 vollends zu trennen.

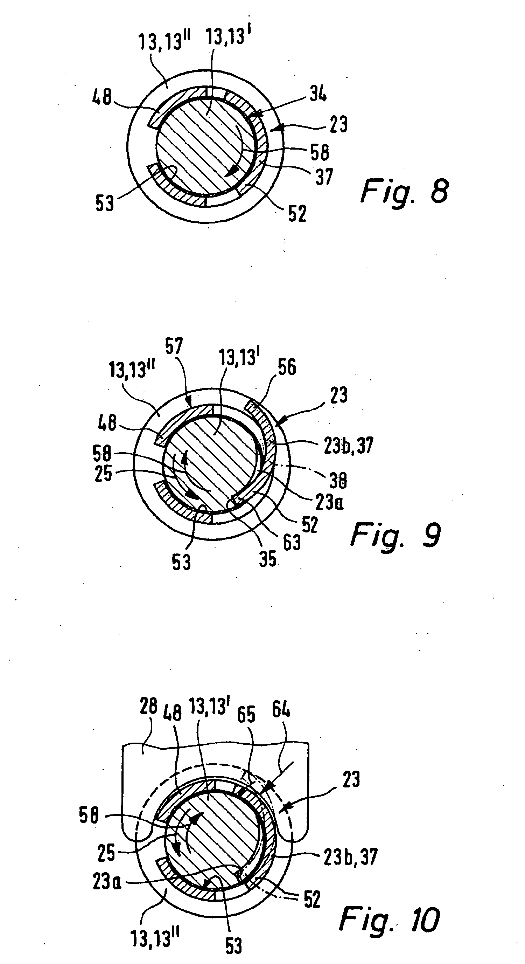

Zur Verdeutlichung der Funktion zeigt die Figur 9 die Sperrwirkung zwischen zwei Zugankerelementen 13, wobei die zweiten Sperrmittelabschnitte 23b mit den ersten Sperrmittelabschnitten 23a derart in Verriegelungseingriff stehen, dass in der Löse-Drehrichtung 25 keine weitere Relativbewegung mehr möglich ist. Wurde hingegen durch das Einwirken mittels eines Entsperrwerkzeuges 28 für eine Entriegelung zwischen den beiden Sperrmittelabschnitten 23a, 23b gesorgt - dies ist in Figur 10 angedeutet -, kann die relative Drehbewegung zum Lösen der Schraubverbindung ungehindert fortgesetzt werden.

Wenn ein ausreichend breiter Betätigungsspalt 27 zur Verfügung gestellt werden kann, ist selbstverständlich auch ein direktes manuelles Entsperren ohne Verwendung eines Entriegelungswerkzeuges möglich.

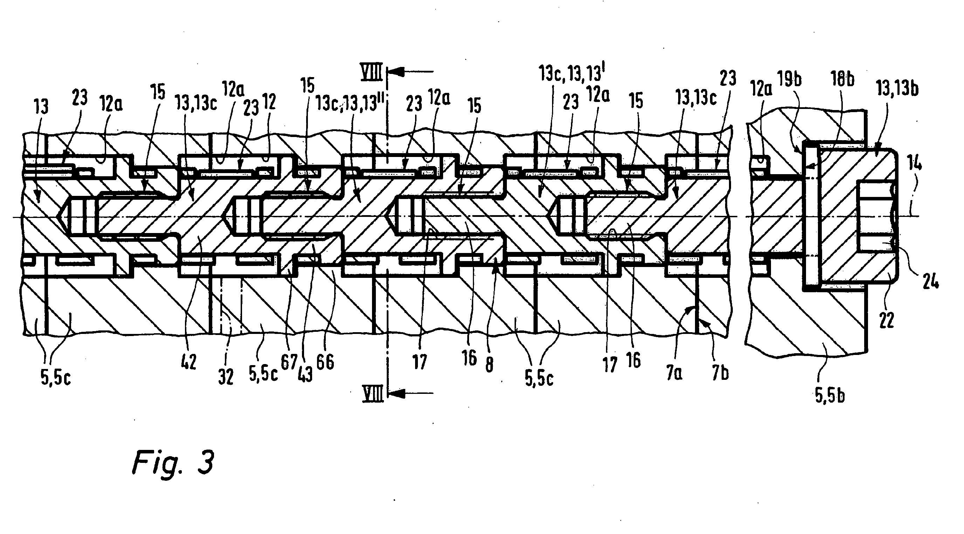

Ferner sind Ausführungsformen möglich, bei denen das Entsperren durchgeführt werden kann, ohne die Module 5 zuvor auseinanderzuschieben. Es ist dann lediglich auf andere Art und Weise die Möglichkeit zu schaffen, auf die Sperrmittel 23 entsperrend einwirken zu können. Hierzu kann beispielsweise, wie dies in Figur 3 strichpunktiert angedeutet ist, ein ein jeweiliges Modul 5 durchsetzender, in dessen Durchgangskanal 12a einmündender Betätigungskanal 32 vorhanden sein, der so platziert ist, dass mittels eines vorübergehend einführbaren Dornes oder eines anderen geeigneten Entsperrwerkzeuges 28 auf die im dortigen Bereich des Durchgangskanals 12a platzierten Sperrmittel 23 entsperrend eingewirkt werden kann.

Ebenfalls denkbar wäre beispielsweise eine an den Modulen 5 fest angeordnete Betätigungsmechanik, die bei Bedarf aktivierbar ist. Hierbei kann es sich beispielsweise um einen federnd in eine unwirksame Stellung vorgespannten Betätigungsstößel handeln, den man zum Entsperren einfach manuell zu verschieben oder zu verschwenken hat.

Insbesondere wenn die Sperrmittel 23 durch einen zuvor zu schaffenden Betätigungsspalt 27 hindurch aktiviert werden sollen, empfiehlt sich eine Anordnung, bei der der Zuganker 8 so ausgebildet ist, dass die Sperrmittel 23 jeweils im Übergangsbereich zwischen zwei unmittelbar benachbarten Modulen 5 zu liegen kommen.

Die Sperrmittel 23 sind beim Ausführungsbeispiel in besonders vorteilhafter Weise ausgeführt.

Zumindest die inneren Zugankerelemente 13c verfügen hierbei über einen zylindrischen und bevorzugt kreiszylindrischen Abstützabschnitt 33, der sich koaxial an den Gewindeschaft 16 anschließt und insbesondere axial zwischen diesem und der Gewindebohrung 17 des gleichen Zugankerelementes 13 zu liegen kommt. Der Außendurchmesser des Abstützabschnittes 33 ist größer als der Außendurchmesser des benachbarten Gewindeschaftes 16.

In den Außenumfang des Abstützabschnittes 33 ist eine zu den ersten Sperrmittelabschnitten 23a gehörende Sperrstufe 35 eingelassen. Sie ist gebildet von dem die maximale Tiefe definierenden Endabschnitt einer keilförmigen Vertiefung 36, die sich mit bogenförmiger Erstreckung in der Umfangsrichtung des Abstützabschnittes 33 erstreckt. Zu dem Gewindeschaft 16 hin ist sie axial offen. Die in der Längsrichtung des Zugankerelementes 13 gemessene Breite der keilförmigen Vertiefung 36 ist geringer als die entsprechend gemessene Länge des Abstützabschnittes 33, dessen Umfangsfläche in noch zu erläuternder Weise eine Abstützfläche 34 für die zweiten Spannmittelabschnitte 23b bildet.

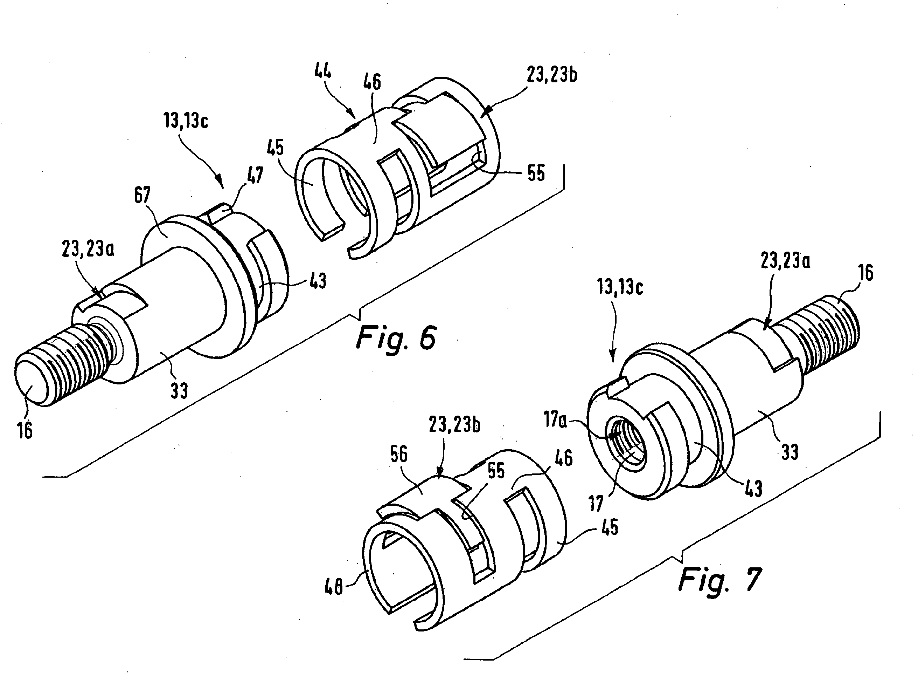

Gewindeschaft 16, Abstützabschnitt 33 und Gewindebohrung 17 sind zweckmäßigerweise Bestandteil eines bevorzugt aus Metall bestehenden, besonders gut aus Figuren 6 und 7 ersichtlichen Gewindeelementes 42. Dabei ist der Abstützabschnitt 33 axial einerseits von dem Gewindeschaft 16 und axial andererseits von einem Halteabschnitt 43 flankiert. Die zu dem Gewindeschaft 16 koaxiale Gewindebohrung 17 ist in den Halteabschnitt 43 eingebracht.

An dem Halteabschnitt 43 ist ein axial über das Gewindeelement 42 hinausragender Sperrmittelträger 44 angeordnet, der die zweiten Sperrmittelabschnitte 23b trägt. Der Sperrmittelträger 44 ist bevorzugt hülsenförmig strukturiert und koaxial zur Längsachse 14 ausgerichtet. Prinzipiell könnte er in einem Stück mit dem Gewindeelement 42 ausgebildet sein. Er lässt sich jedoch einfacher herstellen, wenn er wie beim Ausführungsbeispiel ein bezüglich des Gewindeelementes 42 separates Bauteil ist. Exemplarisch ist er koaxial auf den Halteabschnitt 43 aufgesetzt, insbesondere durch eine Rast- oder Schnappverbindung. Ein bei der Montage elastisch aufweitbarer, geschlitzter Haltering 45 des Sperrmittelträgers 44 umgreift den Halteabschnitt 43 und ist auf Letzterem festgeklemmt.

Sperrmittelträger 44 und Gewindeelement 42 sind drehfest miteinander verbunden. Beispielhaft wird dies dadurch realisiert, dass ein den Haltering 45 tragender Stegabschnitt 46 des Sperrmittelträgers 44 formschlüssig in eine Aussparung 47 am Außenumfang des Gewindeelementes 42 eingreift.

Mit einem hülsenförmigen, bevorzugt längsgeschlitzten Tragabschnitt 48 ragt der Sperrmittelträger 44 über das Gewindeelement 42 axial hinaus. An diesem Tragabschnitt 48 sind die zweiten Sperrmittelabschnitte 23b angeordnet.

Der Tragabschnitt 48 hat einen an den Querschnitt des Abstützabschnittes 33 angepassten Innenquerschnitt. Somit kann ein axial benachbartes Zugankerelement 13 mit seinem Abstützabschnitt 33 in den Tragabschnitt 48 eintauchen, wenn es mit seinem Gewindeschaft 16 in die Gewindebohrung 17 eingeschraubt wird. Im miteinander verschraubten Zustand zweier Zugankerelemente 13 wird somit der Abstützabschnitt 33 des einen Zugankerelementes 13 von dem Tragabschnitt 48 des anderen Zugankerelementes 13 koaxial umgriffen.

Die zweiten Sperrmittelabschnitte 23b enthalten einen bezüglich der Längsachse 14 radial beweglichen Sperrabschnitt 52, der derart an dem Tragabschnitt 48 angeordnet ist, dass er die Tendenz hat, ständig eine nach radial innen über den Innenumfang 53 des Tragabschnittes 48 vorstehende Sperrstellung einzunehmen. Diese Sperrstellung ist in Figur 9 gut zu erkennen.

Der Sperrabschnitt 52 ist zweckmäßigerweise Bestandteil einer Sperrklinke 37, die an dem Tragabschnitt 48 um eine zur Längsachse 14 des Zugankerelementes 13 parallele Schwenkachse 38 verschwenkbar gelagert ist. Die Schwenkachse 38 wird durch Gelenkabschnitte 54 definiert, die nach Art von Filmscharnieren ausgebildet sind und über die die Sperrklinke 37 einstükkig, gleichwohl jedoch biegbar, mit dem Tragabschnitt 48 verbunden ist. Durch die Gelenkabschnitte 54 ergibt sich eine federnde Beaufschlagung der Sperrklinke 37 in Richtung der schon erwähnten Sperrstellung.

Bevorzugt ist die Sperrklinke 37 in einer fensterartigen Durchbrechung 55 der Wandung des Tragabschnittes 48 angeordnet. Sie verfügt zweckmäßigerweise über eine bogenförmige Gestalt, mit einem Krümmungsradius, der demjenigen der Wandung des Tragabschnittes 48 entspricht.

Der Sperrabschnitt 52 ragt in einer Umfangsrichtung des Tragabschnittes 48 von der Schwenkachse 38 weg. In eine andere Richtung, insbesondere in bezüglich des Sperrabschnittes 52 entgegengesetzter Richtung, ragt ein Betätigungsabschnitt 56 der Sperrklinke 37. Er kann in Achsrichtung der Längsachse 14 breiter sein als der Sperrabschnitt 52.

Befindet sich der Sperrabschnitt 52 in der aus Figur 9 ersichtlichen Sperrstellung, steht der Betätigungsabschnitt 56 radial über den Außenumfang 57 des Tragabschnittes 48 vor.

Sperrabschnitt 52 und Betätigungsabschnitt 56 bilden einen zweiarmigen Hebel, der um die Schwenkachse 38 verschwenkbar ist.

Im Folgenden soll eine Schraubverbindung 15 zwischen zwei beliebigen der Zugankerelemente 13 betrachtet werden, wobei diese Zugankerelemente der besseren Unterscheidung wegen als erstes Zugankerelement 13' und zweites Zugankerelement 13" bezeichnet seien.

Ausgehend vom vollständig getrennten Zustand der beiden Zugankerelemente 13', 13" wird das erste Zugankerelement 13' mit seinem Gewindeschaft 16 in die Gewindebohrung 17 des zweiten Zugankerelementes 13" eingeschraubt. Hierbei wird es, mit seinem Gewindeschaft 16 voraus, in den hülsenförmigen Tragabschnitt 48 eingeführt.

Noch bevor bei diesem Ineinanderschrauben die Sperrstufe 35 des ersten Zugankerelementes 13' auf gleicher axialer Höhe mit dem Sperrabschnitt 52 des zweiten Zugankerelementes 13" zu liegen kommt, greifen die Gewinde von Gewindeschaft 16 und Gewindebohrung 17 ineinander ein.

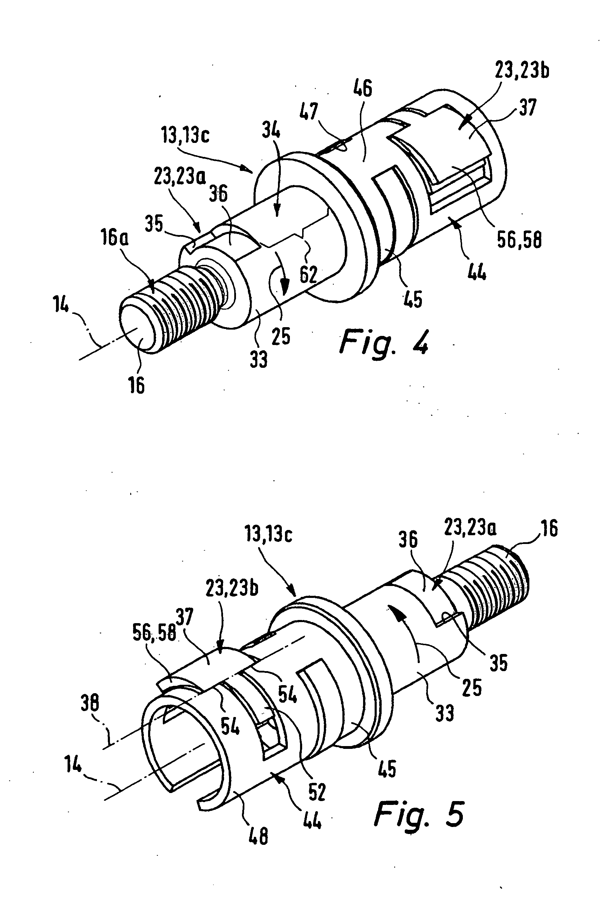

Beim weiteren Einschrauben taucht der Abstützabschnitt 33 des ersten Zugankerelementes 13' mehr und mehr koaxial in den Tragabschnitt 48 ein. Hierbei dreht sich das erste Zugankerelement 13' und mithin dessen Abstützabschnitt 33 in einer der Löse-Drehrichtung 25 entgegengesetzten Einschraub-Drehrichtung 58. Bei der keilförmigen Vertiefung 36 weist diese Drehrichtung 58 in Richtung der radialen Keilverbreiterung, also in Richtung zu der Sperrstufe 35. Dies führt dazu, dass die keilförmige Vertiefung 36 beim Einschrauben des Abstützabschnittes 33 stets mit der Sperrstufe 35 voraus an dem nach innen ragenden Sperrabschnitt 52 vorbeiläuft. Letzterer bewegt sich hierbei ohne Sperrwirkung mehrmals nach radial außen und radial innen, bis die keilförmige Vertiefung 36 den Sperrabschnitt 52 passiert hat und nun der Sperrabschnitt 52 des zweiten Zugankerelementes 13" auf dem unvertieften Abstützabschnitt 33 des ersten Zugankerelementes 13' aufliegt. Diese eingeschraubte Konstellation ist in Figur 8 gezeigt. Der Sperrabschnitt 52 befindet sich in dieser Situation in dem in Figur 4 bei 62 markierten Längenabschnitt der Abstützfläche 34.

Beim Lösen der Schraubverbindung wird das erste Zugankerelement 13' in der Löse-Drehrichtung 25 aus dem zweiten Zugankerelement 13" herausgeschraubt. Hierbei sind einige Schraubumdrehungen möglich, die es erlauben, die beiden Zugankerelemente 13', 13" ohne Sperrwirkung der Sperrmittel 23 ein Stück weit auseinanderzuschrauben. Der nach radial innen vorgespannte Sperrabschnitt 52 leitet hierbei auf dem Längenabschnitt 62 der Abstützfläche 64 ab.

In dem Moment, in dem bei dem Auseinanderschrauben der Sperrabschnitt 52 auf gleiche axiale Höhe mit der keilförmigen Vertiefung 36 gelangt, läuft er in diese hinein und mit seinem stirnseitigen Endabschnitt 63 auf die Sperrstufe 35 auf. Somit liegt ohne spezifische Einflussnahme von außen die Sperrstellung vor, die ein weiteres Herausschrauben des ersten Zugankerelementes 13' aus dem zweiten Zugankerelement 13" verhindert und diese beiden Zugankerelemente in der Löse-Drehrichtung 25 relativ zueinander blockiert.

Vergleichbare Vorgänge finden nacheinander bei allen Schraubverbindungen 15 des Zugankers 8 statt, bis letztlich in Bezug auf sämtliche Schraubverbindungen 15 die Sperrwirkung der Sperrmittel 23 vorliegt. Letztere ist aus Figur 9 ersichtlich.

Zum individuellen Entsperren der Sperrmittel 23 wird gemäß Figur 10 entweder manuell oder mittels eines Entsperrwerkzeuges 28 eine durch Pfeil 64 angedeutete Betätigungskraft auf den nach radial außen ragenden Betätigungsabschnitt 56 der Sperrklinke 37 ausgeübt, sodass diese gemäß dem weiteren Pfeil 65 in einer Weise verschwenkt wird, bei der sich der Betätigungsabschnitt 56 radial an den Abstützabschnitt 33 des ersten Zugankerelementes 13' annähert und gleichzeitig der Sperrabschnitt 52 aus der keilförmigen Vertiefung 36 radial ausschwenkt und dadurch der Eingriff mit der Sperrstufe 35 aufgehoben wird. Nun lässt sich das erste Zugankerelement 13' vollends komplett von dem zweiten Zugankerelement 13" abschrauben. Das für diesen Schraubvorgang an dem ersten Zugankerelement 13' benötigte Drehmoment wird an dem Kopf 22 des zweiten äußeren Zugankerelementes 13b eingeleitet und wird, je nachdem, wo sich die zu lösende Schraubverbindung 15 befindet, unter Umständen über mehrere unentsperrte Sperrmittel 23 übertragen.

Von Vorteil ist, dass ein externer Eingriff nur zum individuellen Entsperren notwendig ist. Aufgrund der federelastischen Aufhängung der Sperrklinke 37 in Verbindung mit der sich in der Löse-Drehrichtung 25 verringernden Tiefe der keilförmigen Vertiefung 36 findet beim Zusammenschrauben zweier Zugankerelemente 13 kein Sperren statt, sodass Eingriffe von außen verzichtbar sind.

Es ist von Vorteil, wenn zumindest die inneren Zugankerelemente 13c in je einem der Module 5 zwar drehbar, gleichwohl jedoch verliersicher gehalten sind. Dies lässt sich durch beliebige Maßnahmen bewerkstelligen. Exemplarisch geschieht dies dadurch, dass in jedem Durchgangskanal 12a ein radial nach innen ragender Haltevorsprung 66 ausgebildet ist, insbesondere in Gestalt einer konzentrischen Verengung des Durchgangskanals 12a. Das eingesteckte Zugankerelement 13 stützt sich axial an einer Flanke des Haltevorsprunges 66 mit einem zwischen dem Halteabschnitt 43 und dem Abstützabschnitt 33 ausgebildeten, nach radial außen vorstehenden ringförmigen Anschlagbund 67 ab. Vor die entgegengesetzte Flanke des Haltevorsprunges 66 ragt ein Sicherungsvorsprung 68, der vorzugsweise von dem Betätigungsabschnitt 56 der Sperrklinke 37 gebildet ist. Zum Einsetzen und Entnehmen eines Zugankerelementes 13 in den beziehungsweise aus dem Durchgangskanal 12a genügt somit ein kurzzeitiges Verschwenken des Sicherungsvorsprunges 68 nach radial innen, sodass er radial innerhalb des Haltevorsprunges 66 vorbeigeführt werden kann.

Während beim Ausführungsbeispiel der zum Entriegeln bewegliche Sperrabschnitt 52 an dem Sperrmittelträger 44 und die Sperrstufe 35 an dem Abstützabschnitt 33 angeordnet ist, ist prinzipiell auch eine umgekehrte Anordnung denkbar.

Während die Sperrwirkung exemplarisch darauf basiert, dass ein Sperrabschnitt 52 von radial außen her in eine Vertiefung eingreift, könnte durchaus auch eine umgekehrte Anordnung vorhanden sein.

## Patentansprüche

1. Zuganker zum lösbaren Zusammenspannen mehrerer Module (5), insbesondere eines modularen Fluidgerätes (3), wobei sich der Zuganker (8) aus wenigstens drei axial aufeinanderfolgenden Zugankerelementen (13) zusammensetzt, die zur Bildung je einer lösbaren Schraubverbindung (15) paarweise ineinander einschraubbar sind, **dadurch gekennzeichnet, dass** an den Zugankerelementen (13) für jede der Schraubverbindungen (15) Sperrmittel (23) vorhanden sind, die es gestatten, die ineinandergeschraubten Zugankerelemente (13) jedes Zugankerelementpaares zunächst ohne Sperrwirkung ein Stück weit auseinanderzuschrauben, und die vor dem vollständigen Auseinanderschrauben eines jeweiligen Zugankerelementpaares eine Sperrwirkung entfalten, indem sie eine in der Drehrichtung (25) des Lösens der Schraubverbindung (15) drehfeste, jedoch individuell entsperrbare Blockierung zwischen den Zugankerelementen (13) hervorrufen.

2. Zuganker nach Anspruch 1, **dadurch gekennzeichnet, dass** zumindest die zwischen den beiden äußeren Zugankerelementen (13, 13a, 13b) angeordneten Zugankerelemente (13, 13c) einenends einen Gewindeschaft (16) mit Außengewinde (16a) und andernends eine Gewindebohrung (17) mit einem dem Außengewinde (16a) entsprechenden Innengewinde (17a) aufweisen.

3. Zuganker nach Anspruch 1 oder 2, **dadurch gekennzeichnet, dass** zumindest die zwischen den beiden äußeren Zugankerelementen (13, 13a, 13b) angeordneten Zugankerelemente (13, 13c) untereinander identisch ausgebildet sind.

4. Zuganker nach einem der Ansprüche 1 bis 3, **dadurch gekennzeichnet, dass** die einer jeweiligen Schraubverbindung (15) zugeordneten Sperrmittel (23) federelastisch auslenkbar in Richtung einer Sperrstellung vorgespannt sind, die beim Auseinanderschrauben das drehfeste Blockieren bewirkt, wobei die Sperrmittel (23) zweckmäßigerweise beim Ineinanderschrauben der Zugankerelemente (13) unwirksam sind und beim Auseinanderschrauben der Zugankerelemente (13) bei Erreichen einer gewissen Relativposition selbsttätig die blockierende Sperrwirkung entfalten.

5. Zuganker nach einem der Ansprüche 1 bis 4, **dadurch gekennzeichnet, dass** an den Sperrmitteln (23) ein manuell oder mittels eines Entsperrwerkzeuges (28) beaufschlagbarer Betätigungsabschnitt (56) vorhanden ist, durch dessen Betätigung die Sperrmittel (23) entsperrbar sind.

6. Zuganker nach einem der Ansprüche 1 bis 5, **dadurch gekennzeichnet, dass** die Sperrmittel (23) mindestens eine am jeweils einen Zugankerelement (13) angeordnete, einen radial auslenkbaren Sperrabschnitt (52) aufweisende Sperrklinke (37) enthalten, die mit ihrem Sperrabschnitt (52) während der Sperrwirkung mit einer Sperrstufe (35) des jeweils anderen Zugankerelementes (13) kooperiert, wobei die Sperrstufe (35) zweckmäßigerweise von dem die maximale Tiefe aufweisenden Endabschnitt einer sich in der Umfangsrichtung des Zugankerelementes (13) erstreckenden bogenförmigen keilförmigen Vertiefung (36) gebildet ist.

7. Zuganker nach Anspruch 6, **dadurch gekennzeichnet, dass** die Sperrklinke (37) um eine zur Längsachse (14) des Zugankerelementes (13) parallele Schwenkachse (38) verschwenkbar ist, wobei sie zweckmäßigerweise bogenförmige gestaltet ist und hierbei insbesondere wippenförmig ausgebildet ist, mit einem von der Schwenkachse (38) wegragenden, zur Kooperation mit der Sperrstufe (35) vorgesehenen Sperrabschnitt (52) und einem in eine andere Richtung von der Schwenkachse (18) wegragenden, zwecks Entsperrung betätigbaren Betätigungsabschnitt (56).

8. Zuganker nach Anspruch 6 oder 7, **dadurch gekennzeichnet, dass** die Sperrklinke (37) an einem zur Längsachse (14) des Zugankerelementes (13) koaxialen hülsenförmigen Sperrmittelträger (44) angeordnet ist und/oder dass die Sperrstufe (35) in einem zylindrischen Abstützabschnitt (33) des Zugankerelementes (13) ausgebildet ist, der eine sich axial an die Sperrstufe (35) anschließende zylindrische Abstützfläche (34) definiert, an der die Sperrklinke (37) mit ihrem Sperrabschnitt (52) außerhalb ihrer Sperrwirkung anliegt, wenn zwei Zugankerelemente (13) zusammengeschraubt sind.

9. Zuganker nach einem der Ansprüche 1 bis 8, **dadurch gekennzeichnet, dass** die Zugankerelemente (13) zumindest teilweise mehrteilig ausgebildet sind, mit einem die zum Herstellen der Schraubverbindungen (15) erforderlichen Gewinde (16a, 17a) aufweisenden Gewindeelement (42) und einem wenigstens einen Teil der Sperrmittel (23) tragenden Sperrmittelträger (44).

10. Zuganker nach einem der Ansprüche 1 bis 9, **dadurch gekennzeichnet, dass** wenigstens eines der beiden äußeren Zugankerelemente (13a, 13b) des Zugankers (8) einen das Ansetzen eines Schraubwerkzeuges ermöglichenden Betätigungsabschnitt (56) aufweist.

11. Modulanordnung, mit mehreren mittels mindestens eines gemäß einem der Ansprüche 1 bis 10 ausgebildeten Zugankers (8) lösbar zusammengespannten Modulen (5).

12. Modulanordnung nach Anspruch 11, **gekennzeichnet durch** eine Ausgestaltung als modular ausgebildetes Fluidgerät (3), insbesondere ein mehrere Ventile (4) aufweisendes Ventilgerät und/oder durch mindestens einen die Gesamtheit von Modulen (5) durchsetzenden, den mindestens einen Zuganker (8) aufnehmenden Zugankerkanal (12).

13. Modulanordnung nach Anspruch 11 oder 12, **dadurch gekennzeichnet, dass** zumindest die zwischen den beiden äußeren Zugankerelementen (13, 13a, 13b) angeordneten Zugankerelemente (13, 13c) jeweils eines der Module (5) durchsetzen, wobei sie über dessen einander entgegengesetzte Fügeflächen (7a, 7b) vorstehen und in das jeweils benachbarte Modul (5) diesbezüglich drehbeweglich eintauchen.

14. Modulanordnung nach einem der Ansprüche 11 bis 13, **dadurch gekennzeichnet, dass** zumindest die zwischen den beiden äußeren Zugankerelementen (13, 13a, 13b) angeordneten Zugankerelemente (13, 13c) jeweils in einem der Module (5) verliersicher und zugleich drehbar gehalten sind.

15. Modulanordnung nach einem der Ansprüche 11 bis 14, **dadurch gekennzeichnet, dass** die Sperrmittel (23) jeweils im Übergangsbereich zwischen zwei unmittelbar benachbarten Modulen (5) angeordnet sind.

16. Modulanordnung nach einem der Ansprüche 11 bis 15, **dadurch gekennzeichnet, dass** die Sperrmittel (23) derart angeordnet sind, dass sie von außen her durch einen Betätigungsspalt (27) hindurch entsperrbar sind, der sich zwischen zwei benachbarten Modulen (5) ergibt, wenn sämtliche Schraubverbindungen (15) bis zu der durch die Sperrmittel (23) hervorgerufenen drehfesten Verbindung gelöst sind und die Module (5) im Bereich des gewünschten Betätigungsspaltes (27) auseinandergeschoben werden, wobei zweckmäßigerweise ein zum Entsperren der Sperrmittel (23) in den Betätigungsspalt (27) einführbares Entsperrwerkzeug (28) vorhanden ist.

## Claims

1. Tie rod for the releasable clamping together of several modules (5), in particular a modular fluidic device (3), wherein the tie rod (8) is comprised of at least three axially consecutive tie rod elements (13) which may be screwed into one another in pairs to form in each case a releasable screwed connection (15), **characterised in that** there are provided on the tie rod elements (13) for each of the screwed connections (15) locking means (23) which allow the screwed-together tie rod elements (13) of each tie rod element pair to unscrew initially for a short distance without locking effect and which, before the complete unscrewing of each tie rod element pair, develop a locking effect in which they generate an interlocking between the tie rod elements (13) which is non-rotatable in the direction of rotation (25) for releasing the screwed connection (15), but is individually releasable.

2. Tie rod according to claim 1, **characterised in that** at least the tie rod elements (13, 13c) located between the two outer tie rod elements (13, 13a, 13b) have at one end a threaded shank (16) with an external thread (16a) and at the other end a threaded hole (17) with an internal thread (17a) matching the external thread (16a).

3. Tie rod according to claim 1 or 2, **characterised in that** at least the tie rod elements (13, 13c) located between the two outer tie rod elements (13, 13a, 13b) are identical to one another.

4. Tie rod according to any of claims 1 to 3, **characterised in that** the locking means (23) assigned to each screwed connection (15) may be deflected with spring elasticity and are biased towards a locked position which effects the non-rotatable interlocking during unscrewing, wherein the locking means (23) are expediently inoperative during screwing together of the tie rod elements (13) and, on unscrewing of the tie rod elements (13) develop the interlocking effect automatically on reaching a certain relative position.

5. Tie rod according to any of claims 1 to 4, **characterised in that** the locking means (23) are provided with an actuating section (56), to which pressure may be applied manually or by means of an unlocking tool (28), through actuation of which the locking means (23) may be released.

6. Tie rod according to any of claims 1 to 5, **characterised in that** the locking means (23) include at least one locking pawl (37) located on each tie rod element (13), with a locking section (52) which may be deflected radially, and which cooperates during the locking action with a locking step (35) of the other respective tie rod element (13), wherein the locking step (35) is formed expediently by the end section with the maximum depth of a bow-shaped and wedge-shaped recess (36) extending in the circumferential direction of the tie rod element (13).

7. Tie rod according to claim 6, **characterised in that** the locking pawl (37) may be pivoted around a pivot axis (38) parallel to the longitudinal axis (14) of the tie rod element (13), wherein it is expediently bow-shaped and at the same time in particular rocker-shaped, with a locking section (52) provided for cooperation with the locking stage (35) extending away from the pivot axis (38), and an actuating section (56) which may be actuated for the purpose of unlocking extending away from the pivot axis (18) in another direction.

8. Tie rod according to claim 6 or 7, **characterised in that** the locking pawl (37) is mounted on a sleeve-shaped locking means carrier (44) coaxial to the longitudinal axis (14) of the tie rod element (13) and/or that the locking step (35) is formed in a cylindrical support section (33) of the tie rod element (13) which defines a cylindrical support face (34) axially adjoining the locking step (35) and on which the locking pawl (37) is in contact with its locking section (52) outside its locking action, when two tie rod elements (13) are screwed together.

9. Tie rod according to any of claims 1 to 8, **characterised in that** the tie rod elements (13) are at least partly multi-sectional, with a threaded element (42) having the thread (16a, 17a) required to create the screwed connections (15), and a locking means carrier (44) carrying at least part of the locking means (23).

10. Tie rod according to any of claims 1 to 9, **characterised in that** at least one of the two outer tie rod elements (13a, 13b) of the tie rod (8) has an actuating section (56) allowing the insertion of a screwdriver.

11. Module assembly with several modules (5) which may be releasably clamped together by means of at least one tie rod (8) designed according to any of claims 1 to 10.

12. Module assembly according to claim 11, **characterised by** design as a modular fluidic device (3), in particular a valve device with several valves (4) and/or by at least one tie rod passage (12) accommodating at least one tie rod (8) and passing through all of the modules (5).

13. Module assembly according to claims 11 or 12, **characterised in that** at least the tie rod elements (13, 13c) located between the two outer tie rod elements (13, 13a, 13b) pass in each case through one of the modules (5), wherein they extend beyond its opposite mating surfaces (7a, 7b) and dip into the respective adjacent module (5) with rotary movement in this respect.

14. Module assembly according to any of claims 11 to 13, **characterised in that** at least the tie rod elements (13, 13c) located between the two outer tie rod elements (13, 13a, 13b) are each held captive and at the same time rotatable in one of the modules (5).

15. Module assembly according to any of claims 11 to 14, **characterised in that** the locking means (23) are in each case mounted in the transition zone between two directly adjacent modules (5).

16. Module assembly according to any of claims 11 to 15, **characterised in that** the locking means (23) are so arranged that they are lockable from the outside through an actuating gap (27) which is created between two adjacent modules (5) when all screwed connections (15) are released as far as the non-rotatable connection generated by the locking means (23), and the modules (5) are pushed apart in the area of the desired actuating gap (27), wherein expediently an unlocking tool (28) which may be inserted into the actuating gap (27) is provided for releasing the locking means (23).

## Revendications

1. Tirant d'ancrage pour l'assemblage amovible de plusieurs modules (5), en particulier d'un appareil à fluide (3) modulaire, le tirant d'ancrage (8) étant composé d'au moins trois éléments du tirant (3) se succédant axialement, qui peuvent être vissés par paires les uns dans les autres pour former à chaque fois un assemblage vissé (15) amovible, **caractérisé en ce que** des moyens de blocage (23) sont présents sur les éléments du tirant d'ancrage (13) pour chacun des assemblages vissés (15), qui permettent de dévisser légèrement, d'abord sans effet de blocage, les éléments (13) vissés les uns dans les autres de chaque paire de tirants d'ancrage, et qui déploient un effet de blocage avant le dévissage complet d'une paire d'éléments d'ancrage respective du fait qu'ils entraînent entre les éléments du tirant d'ancrage (13) un blocage résistant à la torsion dans le sens de rotation (25) du desserrage de l'assemblage vissé (15), mais pouvant être débloqué individuellement.

2. Tirant d'ancrage selon la revendication 1, **caractérisé en ce qu'**au moins les éléments du tirant d'ancrage (13, 13c) disposés entre les deux éléments extérieurs du tirant d'ancrage (13, 13a, 13b) présentent sur une extrémité une tige filetée (16) avec filetage extérieur (16a) et sur l'autre extrémité un alésage fileté (17) avec un filetage intérieur (17a) correspondant au filetage extérieur (16a).

3. Tirant d'ancrage selon la revendication 1 ou 2, **caractérisé en ce qu'**au moins les éléments du tirant d'ancrage (13, 13c) disposés entre les deux éléments du tirant d'ancrage (13, 13a, 13b) extérieurs sont conçus identiques entre eux.

4. Tirant d'ancrage selon l'une quelconque des revendications 1 à 3, **caractérisé en ce que** les moyens de blocage (23) associés à un assemblage vissé (15) respectif, pouvant être déviés de façon élastique, sont prétendus en direction d'une position de blocage, qui entraîne le blocage résistant à la torsion lors du dévissage, les moyens de blocage (23) étant inefficaces de façon appropriée lors du vissage des éléments du tirant d'ancrage (13) et déployant automatiquement l'effet de blocage bloquant lorsqu'on atteint une certaine position relative lors du dévissage des éléments du tirant d'ancrage (13).

5. Tirant d'ancrage selon l'une quelconque des revendications 1 à 4, **caractérisé en ce qu'**une partie d'actionnement (56) pouvant être sollicitée manuellement ou au moyen d'un outil de déblocage (28) est présent sur les moyens de blocage (23), partie dont l'actionnement permet de débloquer les moyens de blocage (23).

6. Tirant d'ancrage selon l'une quelconque des revendications 1 à 5, **caractérisé en ce que** les moyens de blocage (23) contiennent au moins un cliquet de blocage (37) disposé sur le respectivement un élément du tirant d'ancrage (13) et présentant une partie de blocage (52) pouvant être déviée radialement, lequel cliquet coopère avec sa partie de blocage (52) pendant l'effet de blocage avec un niveau de blocage (35) de l'autre élément du tirant d'ancrage (13) respectif, le niveau de blocage (35) étant formé de façon appropriée par la portion d'extrémité présentant la profondeur maximale d'une cavité (36) en forme de clavette, arquée, s'étendant dans le sens périphérique de l'élément du tirant d'ancrage (13).

7. Tirant d'ancrage selon la revendication 6, **caractérisé en ce que** le cliquet de blocage (37) peut basculer autour d'un axe de pivotement (38) parallèle à l'axe longitudinal (14) de l'élément du tirant d'ancrage (13), le cliquet étant conçu de manière appropriée en forme d'arc et étant réalisé ici en particulier en forme de bascule, avec une partie de blocage (52) débordant de l'axe de pivotement (38) et prévue pour coopérer avec le niveau de blocage (35) et une partie d'actionnement (56) dépassant dans une autre direction de l'axe de pivotement (18) et pouvant être actionnée pour le déblocage.

8. Tirant d'ancrage selon la revendication 6 ou 7, **caractérisé en ce que** le cliquet de blocage (37) est disposé sur un support de moyen de blocage (44) en forme de manchon, coaxial par rapport à l'axe longitudinal (14) de l'élément du tirant d'ancrage (13) et/ou **en ce que** le niveau de blocage (35) est conçu dans une partie de soutien (33) cylindrique de l'élément du tirant d'ancrage (13), qui définit une surface de soutien (34) cylindrique se raccordant axialement au niveau du blocage (35), surface sur laquelle le cliquet d'arrêt (37) s'applique avec sa partie de blocage (52) en dehors de son effet de blocage lorsque deux éléments du tirant d'ancrage (13) sont vissés ensemble.

9. Tirant d'ancrage selon l'une quelconque des revendications 1 à 8, **caractérisé en ce que** les éléments du tirant d'ancrage (13) sont conçus au moins partiellement en plusieurs parties, doté d'un élément fileté (42) présentant les filetages (16a, 17a) nécessaires pour l'établissement des assemblages vissés (15) et d'un support de moyen de blocage (44) portant au moins une partie des moyens de blocage (23).

10. Tirant d'ancrage selon l'une quelconque des revendications 1 à 9, **caractérisé en ce qu'**au moins l'un des deux éléments du tirant d'ancrage (13a, 13b) extérieurs du tirant d'ancrage (8) présente une partie d'actionnement (56) permettant le placement d'un outil de vissage.

11. Agencement modulaire, comprenant plusieurs modules (5) pouvant être assemblés de façon amovible au moyen d'au moins un tirant d'ancrage (8) conçu selon l'une quelconque des revendications 1 à 10.

12. Agencement modulaire selon la revendication 11, **caractérisé par** une conception sous forme d'appareil à fluide (3) conçu de façon modulaire, en particulier un appareil à vanne présentant plusieurs vannes (4) et/ou par au moins un canal du tirant d'ancrage (12) traversant la totalité de modules (5) et recevant le au moins le tirant d'ancrage (8).

13. Agencement modulaire selon la revendication 11 ou 12, **caractérisé en ce qu'**au moins les éléments du tirant d'ancrage (13, 13c) disposés entre les deux éléments du tirant d'ancrage (13, 13a, 13b) extérieurs traversent chacun l'un des modules (5), les éléments dépassant des surfaces d'assemblage (7a, 7b) opposées les unes aux autres du module et plongeant de façon mobile en rotation à cet effet dans le module (5) respectivement voisin.

14. Agencement modulaire selon l'une quelconque des revendications 11 à 13, **caractérisé en ce qu'**au moins les éléments du tirant d'ancrage (13, 13c) disposés entre les deux éléments du tirant d'ancrage (13, 13a, 13b) extérieurs sont maintenus à chaque fois dans l'un des modules (5) de façon imperdable et en même temps rotative.

15. Agencement modulaire selon l'une quelconque des revendications 11 à 14, **caractérisé en ce que** les moyens de blocage (23) sont disposés respectivement dans la zone de transition entre deux modules (5) directement voisins.

16. Agencement modulaire selon l'une quelconque des revendications 11 à 15, **caractérisé en ce que** les moyens de blocage (23) sont disposés de telle sorte qu'ils peuvent être débloqués à partir de l'extérieur par une fente d'actionnement (27), qui est obtenue entre deux modules (5) voisins lorsque tous les assemblages vissés (15) sont détachés jusqu'à la liaison résistante à la torsion et provoquée par les moyens de blocage (23) et les modules (5) sont écartés les uns des autres dans la zone de la fente d'actionnement (27) souhaitée, un outil de déblocage (28) pouvant être introduit dans la fente d'actionnement (28) pour le déblocage des moyens de blocage (23) étant présent de façon appropriée.
